(19) Europäisches Patentamt
European Patent Office
Office européen des brevets

(11) Veröffentlichungsnummer: **0 596 316 A1**

(12) # EUROPÄISCHE PATENTANMELDUNG

(21) Anmeldenummer: **93116861.1**

(51) Int. Cl.[5]: **A01N 25/02**, A01N 55/00

(22) Anmeldetag: **19.10.93**

(30) Priorität: **03.11.92 DE 4237070**
**21.11.92 DE 4239181**

(43) Veröffentlichungstag der Anmeldung:
**11.05.94 Patentblatt 94/19**

(84) Benannte Vertragsstaaten:
**DE ES FR IT**

(71) Anmelder: **HOECHST AKTIENGESELLSCHAFT**
**Brüningstrasse 50**
**D-65929 Frankfurt am Main(DE)**

(72) Erfinder: **Röchling, Hans, Dr.**
**Geierfeld 25**
**D-65812 Bad Soden/Taunus(DE)**
Erfinder: **Schubert, Hans-Herbert, Dr.**
**7-4-35-Oi, Shinagawa**
**Tokyo 140(DE)**
Erfinder: **Gunjima, Kohshi, 102 Lions Manshion**
**Chiba Sannoh Daini,**
**3-2 Sannoh-cho,**
**Inage-ku**
**Chiba-shi, Chiba(JP)**

(54) **Wirkungsverstärkung von Neophanen, Azaneophanen und anderen Wirkstoffen durch Penetrationsmittel.**

(57) Die Erfindung betrifft Pflanzenschutzmittelformulierungen, die mindestens einen Wirkstoff aus der Gruppe Tebufenozide, EPN, Dimethylvinfos, Triazophos, Carbofuran, Phosphamidon, Endosulfan, Phenthoate, Phorate, Monocrotophos, Fenthion, Methylparathion, Cartap, Diazinon, Chlorpyrifos, Ethofenprox, Chlorpyrifosmethyl, Cycloprothrin, Isoxathion, Imidacloprid, Flufenpropder und Verbindungen der Formel,

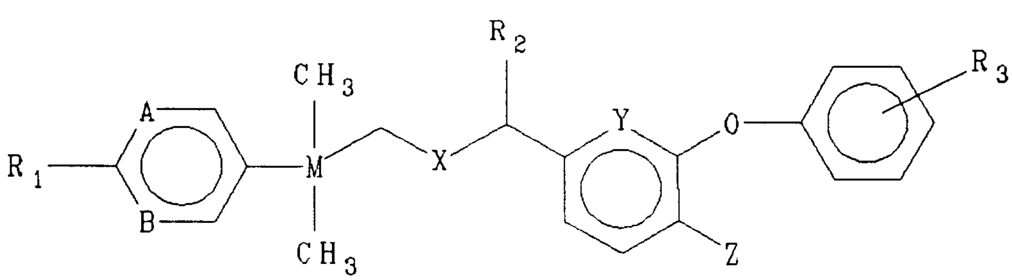

(I)

in der A und B CH, $CR_4$ und/oder N, X $CH_2$, O oder S, Y CH oder N, Z H oder F und M C oder Si bedeuten, und $R_1$, $R_2$, $R_3$ und $R_4$ die in der Beschreibung definierten Bedeutungen haben, und ein pentrationsförderndes Mittel enthalten. Die Formulierungen können, gegebenenfalls nach Verdünnung, zur Bekämpfung von Reisstengelbohrern verwendet werden.

EP 0 596 316 A1

Wirkstoffe aus der Gruppe der Neophane und Azaneophane eignen sich bei guter Pflanzenverträglichkeit zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam (EP-A-224 024, EP-A-249 015, EP-A-288 810). In diesen Dokumenten sind auch die üblichen Formulierungstypen für Insektizide oder Akarizide beschrieben.

Speziell ausgearbeitete Formulierungen von Neophanen und Azaneophanen für die verschiedenen Kulturen und Anwendungsgebiete sind bekannt aus EP-A-443 405 (konzentrierte wäßrige Emulsionen), EP-A-443 412 (hochkonzentrierte emulgierbare Konzentrate), EP-A-443 411 (wasserdispergierbare Granulate), DE-A-3828339 (stabile Stäube).

Alle genannten Formulierungstypen zeigten keine ausreichende Wirkung gegen Reisstengelbohrer, insbesondere den Reisstengelbohrer Chilo suppressalis, einen der Hauptschädlinge im Reisanbau Asiens. Ein Befall mit Chilo suppressalis kann zu deutlichen Ertragsverlusten führen, insbesondere in Korea und den südlichen Ländern Asiens.

Es wurde überraschend gefunden, daß durch Zusatz von penetrationsfördernden Ölen zu den Formulierungen von Neophanen und Azaneophanen und zu einer Reihe weiterer bekannter Reisstengelbohrer-Präparate wie zum Beispiel Ethofenprox und Cycloprothrin eine deutliche Wirkungssteigerung gegenüber Reisstengelbohrern wie Chilo suppressalis, Tryporyza incertulas, Tryporyza innotata, Chilotraea polychrysa, Sesamia inferens u. a. Lepidopteren wie Plutella sp. und auch gegen saugende Insekten, wie z. B. Aphis sp. erreicht werden kann. Insbesondere kann eine deutliche Wirkungssteigerung gegenüber dem Reisstengelbohrer Chilo suppressalis erreicht werden. Diese Wirkungssteigerung wurde in Laborversuchen gefunden und durch Feldtests unter praktischen Bedingungen bestätigt.

Die vorliegende Erfindung betrifft daher neue Pflanzenschutzmittelformulierungen, enthaltend mindestens einen, vorzugsweise einen Wirkstoff ausgewählt aus der Gruppe Tebufenozide, EPN, Dimethylvinfos, Triazophos, Carbofuran, Phosphamidon, Endosulfan, Phenthoate, Phorate, Monocrotophos, Fenthion, Methylparathion, Cartap, Diazinon, Chlorpyrifos, Ethofenprox, Chlorpyrifosmethyl, Cycloprothrin, Isoxathion, Imidacloprid, Flufenpropder und der Verbindungen der Formel I,

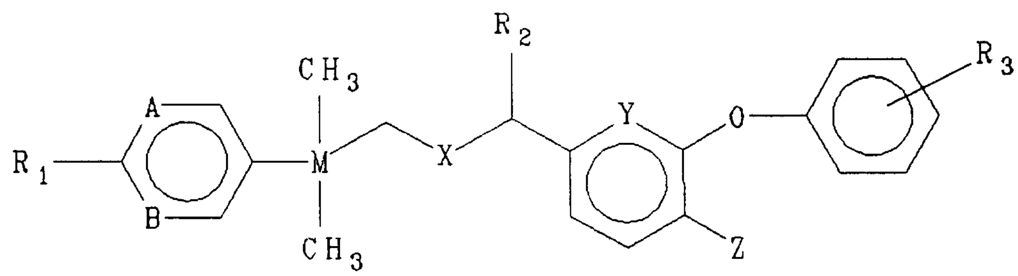

(I)

worin

A und B gleich oder verschieden sind und unabhängig voneinander CH, $CR_4$ oder N bedeuten,
X $CH_2$, O oder S bedeutet,
Y CH oder N bedeutet,
Z H oder F bedeutet,
$R_1$ und $R_4$ gleich oder verschieden sind und unabhängig voneinander H, Halogen, $(C_1\text{-}C_3)$-Alkyl, $(C_1\text{-}C_3)$-Halogenalkyl, $(C_1\text{-}C_3)$-Alkoxy, $(C_1\text{-}C_3)$-Halogenalkoxy, $(C_1\text{-}C_4)$-Alkylthio oder $(C_1\text{-}C_4)$-Halogenalkylthio bedeuten, oder
$R_1$ und $R_4$ zusammen für $-CH_2\text{-}O\text{-}CH_2-$ stehen,
$R_2$ H, $(C_1\text{-}C_3)$-Alkyl, Ethinyl, Vinyl, Halogen oder Cyano bedeutet,
$R_3$ und M H, Halogen, $(C_1\text{-}C_4)$-Alkyl oder $(C_1\text{-}C_3)$-Alkoxy bedeutet C oder Si bedeutet,

und ein pentrationsfördendes Mittel, das eine deutliche Wirkungssteigerung gegenüber Reisstengelbohrern, wie Chilo suppressalis, Tryporyza incertulas, Tryporyza innotata, Chilotraea polychrysa, Sesamia inferens u. a. Lepidopteren wie Plutella sp. und auch gegen saugende Insekten, wie z. B. Aphis sp. bewirkt.

Wirkstoffe der Formel I sind bevorzugt. Daneben sind auch die Wirkstoffe Ethofenprox (®Trebon) und Cycloprothrin (®Cyclosal) bevorzugt. Eine Wirkungsverstärkung kann insbesondere gegenüber Chilo suppressalis beobachtet werden.

Alkyl steht für einen geradkettigen oder verzweigten Alkylrest. Halogenalkyl steht für einen Alkylrest, in welchem die Wasserstoffatome teilweise oder vollständig durch Halogen ersetzt sind; entsprechendes gilt

für davon abgeleitete Reste, wie Halogenalkylthio. Unter Halogen verteht man Fluor, Chlor, Brom oder Iod, insbesondere Fluor oder Chlor.

Bevorzugt sind in Formel I A und B gleich oder verschieden und bedeuten CH oder N, X bedeutet $CH_2$, $R_1$ bedeutet ($C_1$-$C_3$)-Alkoxy, $R_2$ bedeutet H, $R_3$ bedeutet H oder F und M ist Si.

Insbesondere bevorzugt unter den Verbindungen der Formel I ist diejenige, bei der M = Si, $R_1$ = Ethoxy, A und B jeweils = CH, X = $CH_2$, $R_2$ = H, Y = CH, Z = F und $R_3$ = H bedeuten (Silafluofen; Formel Ia).

Bei Zusatz folgender Stoffe wurde eine Wirkungssteigerung beobachtet:

Gemisch naphthenischer und paraffinischer Öle, wie z. B. ®Essobayol 90 von Exxon Chemical;
hochsiedende, naphthenische Mineralölprodukte, wie z. B. ®Enerthene 2367 und 2368 von Deutsche BP;
hochsiedende aliphatische Kohlenwasserstoffe, wie z. B. ®Exsol D 280/310, 240/270 u.a., ®Varsol 240/270, 140, 120 u.a.;
hochsiedende lineare Paraffine, wie z. B. ®Norpar 15, 13, 12 und 8 von Exxon Chemical;
hochsiedende Isoparaffine, wie z. B. ®Isopar V, ®Isopar M, ®Isopar L etc. von Exxon Chemical;
vegetabilische Öle, wie z. B. Rapsöl, Baumwollsaatöl, Leinsamenöl, Soyaöl und Maisöl;
Ester langkettiger Carbonsäuren, vorzugsweise mit bis zu 40 C-Atomen, wie z. B. Isopropylmyristat, Decyloleat, 2-Ethylhexyloleat, i-Butyloleat, Isopropylpalmitat und Oleyloleat;
langkettige Alkohole, vorzugsweise mit bis zu 24 C-Atomen, wie z. B. Hexylalkohol, Octylalkohol, Decylalkohol, Oleylalkohol, 2-Octyldodecanol, 2-Hexyldecanol oder 2-Octyldecanol.

Eine besonders gute wirkungsverstärkende Eigenschaft bei den genannten Wirkstoffen, insbesondere bei den Verbindungen der Formel I haben ®Essobayol, ®Isopar V, Isopropylmyristat und 2-Octyldodecanol. Alle penetrationsfördernden Mittel können allein oder untereinander gemischt eingesetzt werden.

Die Mengenanteile, in denen die Penetrationsförderer in den Formulierungen enthalten sind, hängen von dem jeweiligen Wirkstoffgehalt ab. Im allgemeinen ist der Gehalt an Wirkstoff und Penetrationsmittel in der gleichen Größenordnung: beispielsweise enthält ein Staub mit 0,5 Gew.-% Wirkstoffgehalt in der Regel 0,5 ± 0,3 Gew.-%, vorzugsweise 0,5 ± 0,1 Gew.-% Penetrationsmittel, und ein emulgierbares Konzentrat mit einem Wirkstoffgehalt von 20 Gew.-% enthält in der Regel 10 bis 30 Gew.-%, vorzugsweise 15 bis 25 Gew.-% des Zusatzes. Es kann aber auch ein geringerer oder höherer Anteil an Penetrationsmittel eingesetzt werden.

Die Penetrationsmittel werden also in Mengenanteilen von 0,1 bis 65 Gew.-% angewandt; bevorzugt ist ein Zusatz von 0,5 bis 50 Gew.-%.

Der Wirkstoffgehalt kann 0,1 bis 80 Gew.-% betragen; bevorzugt ist ein Gehalt von 0,5 bis 60 Gew.-%.

Als Formulierungstypen, in denen sich die erfindungsgemäßen Mischungen von Wirkstoff und Penetrationsmittel zubereiten lassen, sind insbesondere emulgierbare Konzentrate, hochkonzentrierte wäßrige Emulsionen, Stäube und Granulate geeignet. Man erhält diese Formulierungen, indem man die Wirkstoffe, Penetrationsmittel und gegebenenfalls weitere Hilfsstoffe wie in den Beispielen angegeben hergestellt.

Folgende Hilfsstoffe können in den erfindungsgemäßen Formulierungen als Emulgatoren, Netzmittel, Lösungsmittel, Trägersubstanzen etc. eingesetzt werden:

Als nichtionische Emulgator-Komponente können beispielsweise verwendet werden: Tributylphenolpolyglykolether mit 10 bis 25 Mol Ethylenoxid, bevorzugt 20 Mol Ethylenoxid (®Sapogenat T200 - Hoechst AG); Fettsäurepolyglycolester mit 36 bzw. 40 Mol Ethylenoxid; (®Emulsogen EL und ®Emulsogen EL 400 - Hoechst AG); Blockoxalkylat, das aus 2 Gew.-% n-Butanol, 44 Gew.-% Propylenoxid und 54 Gew.-% Ethylenoxid besteht (Hoe S 3510 - Hoechst AG); iso-Tridecanolpolyglykolether mit 2 bzw. 4 Mol Ethylenoxid (®Genapol X-020 und ®Genapol X-040 - Hoechst AG);
$C_{12}$-$C_{14}$-Cocosfettalkohol mit 2,5 Mol Ethylenoxid (®Arlipon F von Henkel); Blockoxalkylate, wie z. B. Tributylphenol + 10 Mol Propylenoxid, oxethyliert mit 30 Mol Ethylenoxid (Hoe S 2435); ®Alfol 1620 + 15 Mol Propylenoxid, oxethyliert mit 30 Mol Ethylenoxid (Hoe S 2436); Polypropylenglycol 3000 + 40 Gew.-% Ethylenoxid (Hoe S 1816-1); Polypropylenglykol 3000 + 60 Gew.-% Ethylenoxid (Hoe S 1816-2) (letztere alle von Hoechst AG).

Es können auch Mischungen der genannten nichtionischen Emulgatoren eingesetzt werden. Der Mengenanteil an nichtionischen Emulgatoren beträgt 1 - 18 Gew.-%, bevorzugt 2 bis 13 Gew.-%.

Als anionaktive Emulgatoren können z.B. verwandt werden: Salze der Dodecylbenzolsulfonsäure, Salze der gegebenenfalls chlorierten ($C_{13}$-$C_{18}$)-Alkansulfonsäuren, ferner Emulgatoren aus der Gruppe der ($C_{10}$-$C_{16}$)-Alkylmono bis hexaglykol- ethersulfatsalze und der -($C_{14}$-$C_{19}$)-Alkenolsulfatsalze. Insbesondere ist es günstig, die Salze der Dodecylbenzolsulfonsäure einzusetzen. Der Begriff Salze steht für Alkali-, Erdalkali- oder Ammoniumsalze, bevorzugt für Na- oder Ca-Salze. Insbesondere bevorzugt ist das Ca-Salz der Dodecylbenzolsulfonsäure (Phenylsulfonat Ca, Hoechst AG).

Der Anteil des anionaktiven Emulgators in der fertigen Formulierung beträgt 0,5 bis 8,0 Gew.-%, bevorzugt 1,0 bis 5,0 Gew.-%.

Als Lösungsmittel werden beispielsweise verwandt: aromatische Kohlenwasserstoffe, wie Xylol, ®Solvesso 100, 150 oder 200 von Exxon Chemical, sowie langkettige Alkohole, wie z. B. n-Octanol, Isooctanol oder n-Hexanol.

Für Stäube und Granulate werden als Trägersubstanzen beispielweise eingesetzt: Aluminiumsilikate japanischer Herkunft, wie z. B. ®Shokozan DL Clay, ®Goshima DL Clay, ®Fubasami DL Clay und ®Showa DL Clay; Talkum; Calciumcarbonat (z. B. ®Mikhart von Provencale S.A., Brignoles, Frankreich) oder Calciumsulfat (z. B S2100 A von Conex GmbH, Köln); natürliche Tone wie Kaolin, Bentonit, Fullers Erde, Porphyrillit, Attapulgite oder Diatomeenerde, Kieselgur oder synthetische Ca-Silikate (Winnacker-Küchler, "Chem. Technologie"; Watkins, "Handbook of Insecticide Dust Diluents and Carriers", 2nd Ed., Darland Books, Caldwell N.J.; H. v. Olphen, "Introduction to Clay Colloid Chemistry", 2nd Ed., U. Wiley a. Sons, N.Y.).

Insbesondere sind auch die basisch gefällten Kieselsäuren (z. B. Durosil) zu erwähnen, die bei den Formulierungen in einzelnen Fällen zur Erhöhung der Lagerstabilität beitragen können.

Die folgenden Beispiele der Herstellung und für die biologische Wirkung sollen die Erfindung erläutern, ohne daß diese darauf beschränkt wäre:

Emulgierbare Konzentrate

Beispiel 1

20,0 Gew.-% Wirkstoff der Formel Ia
4,2 Gew.-% Phenylsulfonat-Ca
3,7 Gew.-% Hoe S 3510 - Hoechst AG
10,0 Gew.-% ®Essobayol 90
62,1 Gew.-% ®Solvesso 200
Die Komponenten werden unter Rühren in ®Solvesso 200 gelöst. Der Anteil an ®Essobayol 90 kann bis zu 30 Gew.-% gesteigert werden bei entsprechender Reduktion des Lösungsmittels ®Solvesso 200.

Bei ®Essobayol 90-Gehalten über 30 Gew.-% muß die Emulgator-Zusammensetzung des emulgierbaren Konzentrates geändert werden:

Beispiel 2

30,0 Gew.-% Wirkstoff der Formel Ia
3,3 Gew.-% Phenylsulfonat-Ca
8,7 Gew.-% ®Emulsogen EL
3,0 Gew.-% ®Arlipon F
40,0 Gew.-% ®Essobayol 90
15,0 Gew.-% n-Hexanol
Wirkstoff und Emulgatoren sowie Penetrationsmittel ®Essobayol 90 werden unter Rühren mit dem Lösungsmittel gemischt, bis eine klare Lösung entstanden ist.

Beispiel 3

20,0 Gew.-% Wirkstoff der Formel Ia
4,3 Gew.-% Phenylsulfonat-Ca
3,6 Gew.-% Hoe S 3510 - Hoechst AG
10,0 Gew.-% Isopropylmyristat
62,1 Gew.-% ®Solvesso 200
Herstellung wie bei Beispiel 1 und 2 beschrieben.

Der Anteil an Isopropylmyristat in der Formulierung kann bis auf 30 Gew.-% gesteigert werden bei entsprechender Reduktion des Gehaltes an ®Solvesso 200.

Bei höheren Anteilen an Isopropylmyristat muß eine andere Emulgator-Zusammensetzung gewählt werden.

Beispiel 4

23,0 Gew.-% Wirkstoff der Formel Ia
3,9 Gew.-% Phenylsulfonat-Ca
8,1 Gew.-% ®Emulsogen EL
40,0 Gew.-% Isopropylmyristat
25,0 Gew.-% ®Solvesso 200
Herstellung wie bei Beispiel 1 und 2 beschrieben.

Der Anteil an Isopropylmyristat kann in dieser Zusammensetzung bis auf 50 Gew.-% gesteigert werden bei entsprechender Reduktion des Lösungsmittels ®Solvesso 200.

Beispiel 5

22,0 Gew.-% Wirkstoff der Formel Ia
4,3 Gew.-% Phenylsulfonat-Ca
2,9 Gew.-% ®Sapogenat T200
8,0 Gew.-% ®Emulsogen EL
10,0 Gew.-% 2-Octyldodecanol
52,8 Gew.-% ®Solvesso 200
Herstellung wie bei Beispiel 1 und 2 beschrieben.

Der Gehalt an 2-Octyldodecanol kann bis auf 20 Gew.- % erhöht werden bei gleichzeitiger Reduktion des Gehaltes an ®Solvesso 200.

Bei höheren Anteilen an 2-Octyldodecanol in der Formulierung muß die Zusammensetzung der Emulgatoren und das Lösungsmittel verändert werden:

Beispiel 6

22,0 Gew.-% Wirkstoff der Formel Ia
5,1 Gew.-% Phenylsulfonat-Ca
6,9 Gew.-% ®Emulsogen EL
3,0 Gew.-% ®Arlipon F
25,0 Gew.-% 2-Octyldodecanol
38,0 Gew.-% n-Hexanol
In dieser Rezeptur kann das Penetrationsmittel 2-Octyldodecanol bis auf 50 Gew.-% erhöht werden bei gleichzeitiger Reduktion des n-Hexanol.

Beispiel 7

22,00 Gew.-% Wirkstoff der Formel Ia
4,25 Gew.-% Phenylsulfonat-Ca
3,65 Gew.-% Hoe S 3510 - Hoechst AG
20,00 Gew.-% Rapsöl
50,10 Gew.-% ®Solvesso 200
Die Herstellung erfolgt wie in Beispiel 1 und 2 beschrieben.

In Analogie zu den Beispielen 1 bis 7 werden weitere emulgierbare Konzentrate mit einem Wirkstoffgehalt von 5, 10, 40 und 45 Gew.-% hergestellt.

Konzentrierte wäßrige Emulsion

Beispiel 8

a)
21,2 Gew.-% Wirkstoff der Formel Ia
1,7 Gew.-% Phenylsulfonat-Ca
2,4 Gew.-% Hoe S 3510 - Hoechst AG
3,0 Gew.-% ®Arlipon F
20,0 Gew.-% Isopropylmyristat

Die einzelnen Komponenten werden gemischt und bei 40 °C gerührt bis eine klare Lösung entstanden ist. Anschließend werden

b) 51,7 Gew.-% Wasser unter Rühren zur Lösung a) getropft. Nach dem Zutropfen wird noch 3 Stunden bei 30 °C gerührt. Es entsteht eine Emulsion mit einer Tröpfchengröße von 50 % < 0,38 µm.

Bei Eingabe von 5 ml der emulgierbaren Konzentrate nach Beispiel 1 bis 7 bzw. 5 ml konzentrierter wäßriger Emulsion nach Beispiel 8 in 95 ml CIPAC-Standard Wasser D (CIPAC MT 18.1.4, CIPAC Handbook, Vol. 1, S. 878 (1970)) von 30 °C und umschütteln, wie bei CIPAC MT 36.1.1 (ebenda, S. 910) beschrieben, wird nach 6 Stunden Standzeit bei 30 °C keine ölige Abscheidung beobachtet.

Damit entsprechen die Formulierungen in Bezug auf Emulsionsstabilität den internationalen Prüfbestimmungen.

In Analogie zu Beispiel 8 werden weitere konzentrierte wäßrige Emulsionen mit einem Wirkstoffgehalt von 5, 10, 30 und 40 Gew.-% hergestellt.

Staub-Formulierung

Beispiel 9

a)
43,0 Gew.-% Wirkstoff der Formel Ia
4,4 Gew.-% Phenylsulfonat-Ca
7,6 Gew.-% ®Emulsogen EL
3,0 Gew.-% ®Sapogenat T 200
42,0 Gew.-% Isopropylmyristat

Unter leichtem Erwärmen auf 30 °C werden die Komponenten unter Rühren gemischt, bis eine homogene Lösung erhalten wird.

b) 50,0 Gew.-% Lösung a) werden auf 50,0 Gew.-% ®Durosil getropft, die im Pflugscharmischer bewegt werden. Bis zur vollständigen Adsorption wird noch 15 Min. gemischt.

c) 4 %iger Staub
20,0 Gew.-% des Adsorbates b) werden im Pflugscharmischer mit 80,0 Gew.-% Shokozan DL Clay 15 Min. intensiv gemischt.
Es wird so eine homogene Staubformulierung erhalten.
Korngröße: 50 % der Teilchen < 22 µm.

Durch Verwendung von geringeren oder höheren Mengen des Adsorbates b) beim Mischungsvorgang c) können geringer oder höher konzentrierte Stäube, beispielsweise mit einem Wirkstoffgehalt von 2, 8 und 15 Gew.-%, hergestellt werden.

Granulat-Formulierung

Beispiel 10

a)
1,1 Gew.-% Wirkstoff der Formel Ia
0,3 Gew.-% Phenylsulfonat-Ca
0,7 Gew.-% ®Emulsogen EL
1,4 Gew.-% Isopropylmyristat

Die Komponenten werden unter Rühren bei 30 °C gemischt, bis eine klare Lösung erhalten wird.
Die so erhaltene Lösung a) wird auf

b) 94,0 Gew.-% $CaCO_3$-Granulat-Träger (Mikhart 0,35 - 0,7), der im Pflugscharmischer bewegt wird, aufgetragen. Nach 15 Min. werden 2,5 Gew.-% Kieselgur 12 O zum Abtrocknen aufgegeben. Danach wird noch weitere 5 Minuten am Pflugscharmischer gemischt.

Man erhält so ein homogenes Granulat mit einer Partikelgröße von 0,25 - 0,9 mm.

In Analogie zu Beispiel 10 werden weitere Granulat-Formulierungen mit einem Wirkstoffgehalt von 0,5; 2 und 4 Gew.-% hergestellt.

Vergleichsformulierung ohne Penetrationsförderer

Emulgierbares Konzentrat

Beispiel 11

21,0 Gew.-% Wirkstoff der Formel Ia
3,0 Gew.-% ®Sapogenat T 200
4,4 Gew.-% Phenylsulfonat-Ca
7,6 Gew.-% ®Emulsogen EL
64,0 Gew.-% ®Solvesso 200
Die Komponenten werden gerührt, bis eine klare Lösung entstanden ist.

Beispiele zur biologischen Wirkung

Tabelle I

Insect dipping-Methode bei Anwendung von 200 ppm Wirkstoff; Beurteilung 5 Tage nach Applikation.

| Formulierung | Anteil Penetrationsmittel in der Formulierung | % Abtötung Chilo - suppressalis | Plutella xylostella |
|---|---|---|---|
| Beispiel 11 (Vergleichsformulierung) | ohne Penetrationsmittel | 0 | 70 |
| Beispiel 1 | 10 % ®Essobayol 90 | 98 | 100 |
| Beispiel 1 | 15 % ®Essobayol 90 | 100 | 100 |
| Beispiel 1 | 20 % ®Essobayol 90 | 98 | 100 |
| Beispiel 1 | 25 % ®Essobayol 90 | 98 | 100 |
| Beispiel 1 | 30 % ®Essobayol 90 | 100 | 100 |
| Beispiel 3 | 10 % Isopropylmyristat | 83 | 100 |
| Beispiel 3 | 15 % Isopropylmyristat | 90 | 100 |

| Formulierung | Anteil Penetrationsmittel in der Formulierung | % Abtötung Chilo suppressalis | - Plutella xylostella |
|---|---|---|---|
| Beispiel 3 | 20 % Isopropylmyristat | 100 | 100 |
| Beispiel 3 | 25 % Isopropylmyristat | 98 | 100 |
| Beispiel 3 | 30 % Isopropylmyristat | 100 | 100 |
| Beispiel 4 | 40 % Isopropylmyristat | 90 | 100 |
| Beispiel 4 | 50 % Isopropylmyristat | 90 | 100 |
| Beispiel 5 | 10 % 2-Octyldodecanol | 48 | 100 |
| Beispiel 5 | 15 % 2-Octyldodecanol | 73 | 100 |
| Beispiel 5 | 20 % 2-Octyldodecanol | 75 | 100 |

Tabelle II

| Freilandversuch an Reisstengelbohrer (Chilo suppressalis) | | |
|---|---|---|
| Formulierung | Verdünnungsrate | % Kontrolle |
| Beispiel 11 (Vergleichsformulierung) | 1500 x | 45,5 |
| Beispiel 11 (Vergleichsformulierung) | 2000 x | 0 |
| Beispiel 3 (20 % Isopropylmyristat) | 2000 x | 96,0 |
| Beispiel 3 (20 % Isopropylmyristat) | 3000 x | 92,8 |

## Patentansprüche

1. Pflanzenschutzmittelformulierung, enthaltend mindestens einen Wirkstoff ausgewählt aus der Gruppe Tebufenozide, EPN, Dimethylvinfos, Triazophos, Carbofuran, Phosphamidon, Endosulfan, Phenthoate, Phorate, Monocrotophos, Fenthion, Methylparathion, Cartap, Diazinon, Chlorpyrifos, Ethofenprox, Chlorpyrifosmethyl, Cycloprothrin, Isoxathion, Imidacloprid, Flufenpropder und Verbindungen der Formel I,

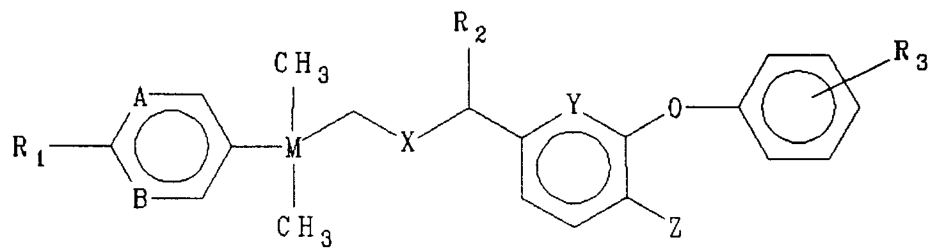

(I)

worin

| | |
|---|---|
| A und B | gleich oder verschieden sind und unabhängig voneinander CH, $CR_4$ oder N bedeuten, |
| X | $CH_2$, O oder S bedeutet, |
| Y | CH oder N bedeutet, |
| Z | H oder F bedeutet, |
| $R_1$ und $R_4$ | gleich oder verschieden sind und unabhängig voneinander H, Halogen, $(C_1$-$C_3)$-Alkyl, $(C_1$-$C_3)$-Halogenalkyl, $(C_1$-$C_3)$-Alkoxy, $(C_1$-$C_3)$-Halogenalkoxy, $(C_1$-$C_4)$-Alkylthio oder $(C_1$-$C_4)$- Halogenalkylthio bedeuten, oder |
| $R_1$ und $R_4$ | zusammen für $-CH_2$-O-$CH_2$- stehen, |
| $R_2$ | H, $(C_1$-$C_3)$-Alkyl, Ethinyl, Vinyl, Halogen oder Cyano bedeutet, |
| $R_3$ | H, Halogen, $(C_1$-$C_4)$-Alkyl oder $(C_1$-$C_3)$-Alkoxy bedeutet und |
| M | C oder Si bedeutet, |

und ein pentrationsfördendes Mittel.

2. Formulierung gemäß Anspruch 1, worin in Formel I A und B gleich oder verschieden und CH oder N bedeuten, X $CH_2$ bedeutet, $R_1$ $(C_1$-$C_3)$-Alkoxy bedeutet, $R_2$ H bedeutet, $R_3$ H oder F bedeutet und M = Si ist.

3. Formulierung gemäß Anspruch 1 oder 2, worin in Formel I M = Si, $R_1$ = Ethoxy, A und B jeweils = CH, X = $CH_2$, $R_2$ = H, Y = CH, Z = F und $R_3$ = H bedeuten.

4. Formulierung gemäß Anspruch 1, enthaltend Ethofenprox oder Cycloprothrin als Wirkstoff.

5. Formulierung gemäß einem der Ansprüche 1 bis 4, in welcher der Wirkstoffgehalt 0,1 bis 80 Gew.-% und der Gehalt an Penetrationsmittel 0,1 bis 65 Gew.-% beträgt.

6. Formulierung gemäß einem der Ansprüche 1 bis 5, welche mindestens einen weiteren Hilfsstoff vorzugsweise aus der Gruppe der Emulgatoren, Netzmittel, Lösungsmittel und Trägersubstanzen enthält.

7. Verfahren zur Herstellung einer Formulierung gemäß einem der Ansprüche 1 bis 6, dadurch gekennzeichnet, daß man Wirkstoffe, Penetrationsmittel und gegebenenfalls weitere Hilfsstoffe vermischt.

8. Verwendung eines Penetrationsmittels zur Steigerung der Wirkung eines wie im Anspruch 1 definierten Wirkstoffs zur Bekämpfung von Reisstengelbohrern.

9. Verwendung einer Formulierung gegebenenfalls nach gebrauchsfertiger Verdünnung zur Bekämpfung von Reisstengelbohrern, vorzugsweise von Chilo suppressalis u. a. Lepidopteren, wie z. B. Plutella sp. oder Aphis sp..

**10.** Verfahren zur Bekämpfung von Reisstengelbohrern, vorzugsweise von Chilo suppressalis u. a. Lepidopteren, wie z. B. Plutella sp. oder Aphis sp., dadurch gekennzeichnet, daß man die Insekten bzw. die befallenen Pflanzen oder die Anbauflächen mit einer gegebenenfalls gebrauchsfertig verdünnten Formulierung gemäß einem der Ansprüche 1 bis 6 behandelt.

Europäisches Patentamt

# EUROPÄISCHER RECHERCHENBERICHT

Nummer der Anmeldung
EP 93 11 6861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 415 568 (ICI)<br>* Ansprüche 1-3,10 *<br>--- | 1-10 | A01N25/02<br>A01N55/00 |
| X | GB-A-1 216 360 (TETSUO TAKAHASHI)<br>* Seite 1, Zeile 44 - Zeile 47 *<br>* Seite 2; Beispiel 2 *<br>--- | 1,5-10 | |
| X | CHEMICAL PATENTS INDEX, DOCUMENTATION ABSTRACTS JOURNAL<br>Week 9003,<br>Derwent Publications Ltd., London, GB;<br>AN 90-20246/03<br>& JP-A-01 301 605 (DAINIPPON JOCHUGIKU) 5. Dezember 1989<br>* Zusammenfassung *<br>--- | 1-10 | |
| X | CHEMICAL PATENTS INDEX, BASIC ABSTRACTS JOURNAL<br>Week 8809,<br>Derwent Publications Ltd., London, GB;<br>AN 88-061248<br>& JP-A-63 017 802 (MITSUI TOATSU) 25. Januar 1988<br>* Zusammenfassung *<br>--- | 1-10 | RECHERCHIERTE SACHGEBIETE (Int.Cl.5)<br>A01N |
| X | CHEMICAL PATENTS INDEX, BASIC ABSTRACTS JOURNAL<br>Week 8652,<br>Derwent Publications Ltd., London, GB;<br>AN 86-341881/52<br>& JP-A-61 254 507 (MITSUBISHI CHEM) 12. November 1986<br>* Zusammenfassung *<br>--- | 1,5-10 | |
| X,D | EP-A-0 443 412 (HOECHST)<br>* Ansprüche 1-4 *<br>* Seite 5, Zeile 40 - Zeile 42 *<br>---<br>-/-- | 1-10 | |

Der vorliegende Recherchenbericht wurde für alle Patentansprüche erstellt

| Recherchenort | Abschlußdatum der Recherche | Prüfer |
|---|---|---|
| DEN HAAG | 7. Februar 1994 | Decorte, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung
EP 93 11 6861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X,D | DE-A-38 28 339 (HOECHST)<br>* Anspruch 1 *<br>* Seite 3, Zeile 55 - Zeile 60 *<br>--- | 1-10 | |
| X | FR-A-2 204 355 (BRITISH PETROLEUM)<br>* Seite 1, Zeile 4 - Zeile 8 *<br>----- | 1 | |
| | | | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| DEN HAAG | 7. Februar 1994 | Decorte, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)